# EUROPEAN PATENT APPLICATION

(11) **EP 4 418 774 A1**
(43) Date of publication of application: **21.08.2024**
(21) Application number: 22880228.6
(22) Date of filing: 09.10.2022
(51) Int. Cl.: H04W 64/00

(54) **UPLINK POSITIONING REFERENCE SIGNAL (SRS) CONFIGURATION METHOD AND APPARATUS, AND NETWORK SIDE DEVICE**

(30) Priority: 13.10.2021 CN 202111193195
(71) Applicant: Vivo Mobile Communication Co., Ltd., Dongguan, Guangdong 523863 (CN)
(72) Inventor: PAN, Xiang, Dongguan, Guangdong 523863 (CN); ZHANG, Hongping, Dongguan, Guangdong 523863 (CN)
(74) Representative: Lavoix
(86) International application number: PCT/CN2022/124096
(87) International publication number: WO 2023/061289

(57) **Abstract**

This application discloses an uplink positioning reference signal SRS configuration method and apparatus, and a network-side device; and pertains to the field of communication technologies. The uplink positioning SRS configuration method of embodiments of this application includes: sending, by a first network-side device, uplink positioning SRS configuration related information to a second network-side device in a process of changing a serving cell or camp-on cell of a terminal; where the uplink positioning SRS configuration related information is used to assist the second network-side device to configure an uplink positioning SRS for the terminal.

## Description

### CROSS-REFERENCE TO RELATED APPLICATIONS

This application claims priority to Chinese Patent Application No. 202111193195.2, filed in China on October 13, 2021, which is incorporated herein by reference in its entirety.

### TECHNICAL FIELD

This application pertains to the field of communication technologies, and specifically relates to an uplink positioning reference signal SRS configuration method and apparatus, and a network-side device.

### BACKGROUND

An uplink reference signal-based positioning method is introduced into related technologies, and is specifically as follows: a positioning sounding reference signal (Position Sounding Reference Signal, Pos SRS) configuration is requested by a location management function (Location Management Function, LMF), finally determined by a serving base station, and then forwarded to a terminal through the LMF. During the positioning procedure, the LMF requests a related base station (that is, the serving base station and a neighboring base station) to perform Pos SRS measurement, and determines a positioning result for the terminal through calculation after receiving a measurement result from the related base station.

However, each terminal has its own Pos SRS configuration. If the terminal hands over or resumes (Resume) to a new cell during the moving process, a target base station corresponding to the new cell may release a Pos SRS configuration configured by an original serving base station due to resource configuration conflict. Consequently, the related base station is unable to receive a Pos SRS later, and thus cannot obtain a Pos SRS measurement result. In this case, the related base station may feed back a measurement failure to the LMF, and the LMF may request for a new Pos SRS configuration. In the positioning procedure, if a moving range of the terminal is relatively large, the Pos SRS configuration may be reconfigured frequently, resulting in a long positioning delay.

### SUMMARY

Embodiments of this application provide an uplink positioning reference signal SRS configuration method and apparatus, and a network-side device, so as to assist network-side devices to implement uplink positioning SRS configuration through interaction between the network-side devices. In this way, an uplink positioning SRS configuration configured by a first network-side device can be continuously used by a second network-side device, decreasing frequency of reconfiguring an uplink positioning SRS configuration.

According to a first aspect, an uplink positioning SRS configuration method is provided, where the method includes:
sending, by a first network-side device, uplink positioning SRS configuration related information to a second network-side device in a process of changing a serving cell or camp-on cell of a terminal; where
the uplink positioning SRS configuration related information is used to assist the second network-side device to configure an uplink positioning SRS for the terminal.

According to a second aspect, an uplink positioning SRS configuration apparatus, applied to a first network-side device, where the uplink positioning SRS configuration apparatus includes:
a first sending module, configured to send uplink positioning SRS configuration related information to a second network-side device in a process of changing a serving cell or camp-on cell of a terminal; where
the uplink positioning SRS configuration related information is used to assist the second network-side device to configure an uplink positioning SRS for the terminal.

According to a third aspect, an uplink positioning SRS configuration method is provided, where the method includes:
receiving, by a second network-side device, uplink positioning SRS configuration related information from a first network-side device in a process of changing a serving cell or camp-on cell of a terminal; and
configuring, by the second network-side device, an uplink positioning SRS configuration of the terminal based on the uplink positioning SRS configuration related information; where
the uplink positioning SRS configuration related information is used to assist the second network-side device to configure an uplink positioning SRS for the terminal.

According to a fourth aspect, an uplink positioning SRS configuration apparatus, applied to a second network-side device, where the uplink positioning SRS configuration apparatus includes:
a first receiving module, configured to receive uplink positioning SRS configuration related information from a first network-side device in a process of changing a serving cell or camp-on cell of a terminal; and
a first configuration module, configured to configure an uplink positioning SRS configuration of the terminal based on the uplink positioning SRS configuration related information; where
the uplink positioning SRS configuration related information is used to assist the second network-side device to configure an uplink positioning SRS for the terminal.

According to a fifth aspect, a network-side device is provided, where the network-side device includes a processor, a memory, and a program or instructions stored in the memory and capable of running on the processor, and when the program or instructions are executed by the processor, the steps of the method according to the first aspect are implemented, or the steps of the method according to the third aspect are implemented.

According to a sixth aspect, a network-side device is provided, including a processor and a communication interface, where the communication interface is configured to send uplink positioning SRS configuration related information to a second network-side device in a process of changing a serving cell or camp-on cell of a terminal; where the uplink positioning SRS configuration related information is used to assist the second network-side device to configure an uplink positioning SRS for the terminal;
or,
the communication interface is configured to receive uplink positioning SRS configuration related information from a first network-side device in a process of changing a serving cell or camp-on cell of a terminal; and the processor is configured to configure an uplink positioning SRS configuration of the terminal based on the uplink positioning SRS configuration related information, where the uplink positioning SRS configuration related information is used to assist the second network-side device to configure an uplink positioning SRS for the terminal.

According to a seventh aspect, a readable storage medium is provided, where a program or instructions are stored in the readable storage medium, and when the program or instructions are executed by a processor, the steps of the method according to the first aspect are implemented, or the steps of the method according to the third aspect are implemented.

According to an eighth aspect, a chip is provided, where the chip includes a processor and a communication interface, the communication interface is coupled to the processor, and the processor is configured to run a program or instructions to implement the method according to the first aspect or implement the method according to the third aspect.

According to a ninth aspect, a computer program/program product is provided, where the computer program/program product is stored in a non-transitory storage medium, and the program/program product is executed by at least one processor to implement the steps of the method according to the first aspect or the steps of the method according to the third aspect.

According to a tenth aspect, a communication device is provided, configured to execute the steps of the method according to the first aspect or execute the steps of the method according to the third aspect.

In the embodiments of this application, the first network-side device sends the uplink positioning SRS configuration related information to the second network-side device in the process of changing the serving cell or camp-on cell of the terminal, where the uplink positioning SRS configuration related information is used to assist the second network-side device to configure the uplink positioning SRS for the terminal. In this case, if switching or resuming (Resume) of the serving cell is performed during moving of the terminal, the original serving cell may send the uplink positioning SRS configuration related information to the switched-to or resumed target serving cell before or during switching or resuming of the serving cell, so as to assist the target serving cell to configure the uplink positioning SRS for the terminal. This can avoid a problem in the related art that after switching to the target serving cell, if the target serving cell determines to release an uplink positioning SRS configured by the original serving cell, the LMF can request the target serving cell to reconfigure an SRS only upon receiving a feedback measurement failure from a related base station. Therefore, the embodiments of this application can reduce a probability of SRS reconfiguration to reduce a positioning delay.

### BRIEF DESCRIPTION OF DRAWINGS

FIG. 1 is a block diagram of a wireless communication system to which the embodiments of this application are applicable;
FIG. 2 is a schematic diagram of an uplink positioning procedure in the related art;
FIG. 3 is a flowchart of an uplink positioning SRS configuration method according to an embodiment of this application;
FIG. 4 is a flowchart of another uplink positioning SRS configuration method according to an embodiment of this application;
FIG. 5 is a schematic structural diagram of a first uplink positioning SRS configuration apparatus according to an embodiment of this application;
FIG. 6 is a schematic structural diagram of a second uplink positioning SRS configuration apparatus according to an embodiment of this application;
FIG. 7 is a schematic structural diagram of a network-side device according to an embodiment of this application; and
FIG. 8 is a schematic structural diagram of another network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

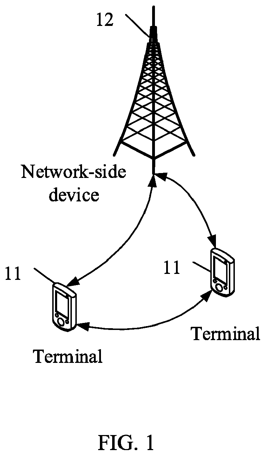

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device, WD), vehicle user equipment (Vehicle User Equipment, VUE), pedestrian user equipment (Pedestrian User Equipment, PUE), and a smart home device (a home device with wireless communication function, such as refrigerator, television, washing machine, or furniture). The wearable device includes: a smart watch, a wrist band, smart earphones, smart glasses, smart jewelry (a smart bangle, a smart bracelet, a smart ring, a smart necklace, a smart anklet, a smart ankle bracelet, or the like), a smart wristband, smart clothing, a game console, and the like. It should be noted that a specific type of the terminal 11 is not limited in the embodiments of this application. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

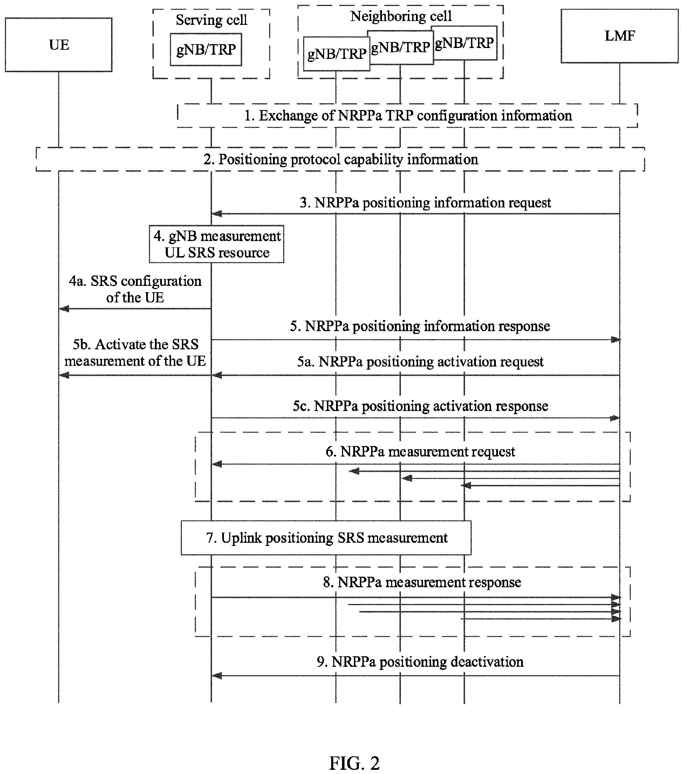

As shown in FIG. 2, in the related art, an uplink positioning procedure of user equipment (User Equipment, UE) mainly includes the following steps.

Step 1. An LMF obtains information about a transmission and reception point (TRP).

Step 2. The LMF obtains a UE positioning capability.

Step 3: The LMF sends a new radio (NR) positioning protocol A (NR positioning protocol A, NRPPa) message: positioning information request (POSITIONING INFORMATION REQUEST) to a serving base station to request for Pos SRS configuration information of target UE.

Step 4: The serving base station determines a Pos SRS configuration and sends the Pos SRS configuration to the target UE.

Step 5: The serving base station sends a Pos SRS configuration through an NRPPa message: POSITIONING INFORMATION RESPONSE to the LMF.

Step 6: For a semi-persistent (semi-persistent) or aperiodic (aperiodic) Pos SRS, the LMF requests the serving base station to activate the Pos SRS configuration through an NRPPa message: positioning activation request (Positioning Activation Request). If the Pos SRS configuration is activated by using a medium access control control element (Medium Access Control-Control element, MAC CE) or downlink control information (Downlink Control Information, DCI), the serving base station feeds back an NRPPa message: positioning activation response (NRPPa Positioning Activation Response) after activation to confirm that the Pos SRS has been activated.

Step 7: The LMF sends the Pos SRS configuration to a related base station through an NRPPa message: measurement request (MEASUREMENT REQUEST), and requests the related base station to perform SRS measurement based on the Pos SRS configuration.

Step 8: The related base station performs SRS measurement based on the configuration.

Step 9: The related base station feeds back an SRS measurement result through an NRPPa message: measurement response (Measurement Response).

Step 10: The LMF sends an NRPPa message: positioning deactivation (POSITIONING DEACTIVATION) instruction to the serving cell to deactivate or release the Pos SRS configuration.

In the uplink positioning procedure shown in FIG. 2, if the related base station cannot obtain the SRS measurement result, the related base station feeds an NRPPa message back to LMF: measurement failure indication (MEASUREMENT FAILURE INDICATION), where the measurement failure indication can indicate requested item being temporarily not available (Requested Item Temporarily not Available). Specifically, the measurement failure indication is sent by a next generation radio access network (Next Generation Radio Access Network, NG-RAN) node to indicate that reporting cannot be made for previously requested measurement. For example, the measurement failure indication may be an information structure shown in Table 1 below.

**Table 1**

| Information element/group name (Information Element/Group Name) | Presence (Presence) | Range (Range) | Information element type and reference (Information Element type and reference) | Semantics description (Semantics description) | Criticality (Criticality) | Assigned criticality (Assigned Criticality) |
|---|---|---|---|---|---|---|
| Message type (Message Type) | M | | 9.2.3 | | YES | Reject (reject) |
| NRPPa transaction ID (Transaction ID) | M | | 9.2.4 | | - | |
| LMF measurement ID (Measurement ID) | M | | INTEGER (1..65536, ...) | | YES | reject |
| RAN measurement ID (Measurement ID) | M | | INTEGER (1..65536, ...) | | YES | reject |
| Cause (Cause) | M | | 9.2.1 | | YES | Ignore (ignore) |

In this case, based on the measurement failure indication received, the LMF may request the serving base station to reconfigure an SRS, and the base station may send a positioning information update (POSITIONING INFORMATION UPDATE) message to the LMF to send a Pos SRS configuration update. Specifically, if the Pos SRS configuration (configuration) information is included in this message, the LMF should consider it as the latest Pos SRS configuration of the UE. The NRPPa transaction ID (NRPPa Transaction ID) information in the measurement failure indication is used to associate a same positioning procedure. Specifically, the positioning information update message is sent by the NG-RAN node to the LMF, indicating that the Pos SRS configuration has changed. For example, the positioning information update message may have an information structure shown in Table 2 below.

**Table 2**

| Information Element/Group Name | Presence | Range | Information Element type and reference | Semantics description | Criticality | Assigned Criticality |
|---|---|---|---|---|---|---|
| Message Type | M | | 9.2.3 | | YES | reject |
| NRPPa Transaction ID | M | | 9.2.4 | | - | |
| SRS configuration (Configuration) | O | | 9.2.28 | | YES | ignore |
| SFN initialization time (Initialization Time) | O | | 9.2.36 | | YES | ignore |

It can be learned from the above that because the Pos SRS configuration in the related art is target UE-specific (UE-specific), if the UE hands over or resumes to a new serving cell during the moving process, the target base station (a base station corresponding to the new serving cell) may release a positioning (positioning, Pos) SRS configured by the original serving base station due to resource configuration conflict. Consequently, the related base station cannot obtain a Pos SRS measurement result later. In this case, the related base station feeds back an SRS measurement failure, and the LMF may request for a new Pos SRS configuration from the target base station based on a case of SRS measurement failure. In this way, for the target UE requiring periodic or frequent positioning, if a moving range of the UE is relatively large, it may lead to frequent Pos SRS reconfiguration, increasing a positioning delay.

However, in this embodiment of this application, the UE already configured with an uplink positioning SRS may exchange, during the moving process, an uplink positioning SRS configuration through a source node (Source Node), a target node (Target Node), and the LMF that are corresponding to the original serving cell or the camp-on cell, thereby ensuring mobility in the positioning procedure and reducing SRS reconfiguration.

It should be noted that the foregoing uplink positioning SRS may be also referred to as uplink positioning sounding reference signal or uplink positioning reference signal, or may be referred to as uplink Pos SRS, which is collectively called uplink positioning SRS in the following embodiments of this application for ease of description.

The following describes in detail an uplink positioning SRS configuration method, an uplink positioning SRS configuration apparatus, a network-side device, and a readable storage medium provided in the embodiments of this application by using some embodiments and application scenarios thereof with reference to the accompanying drawings.

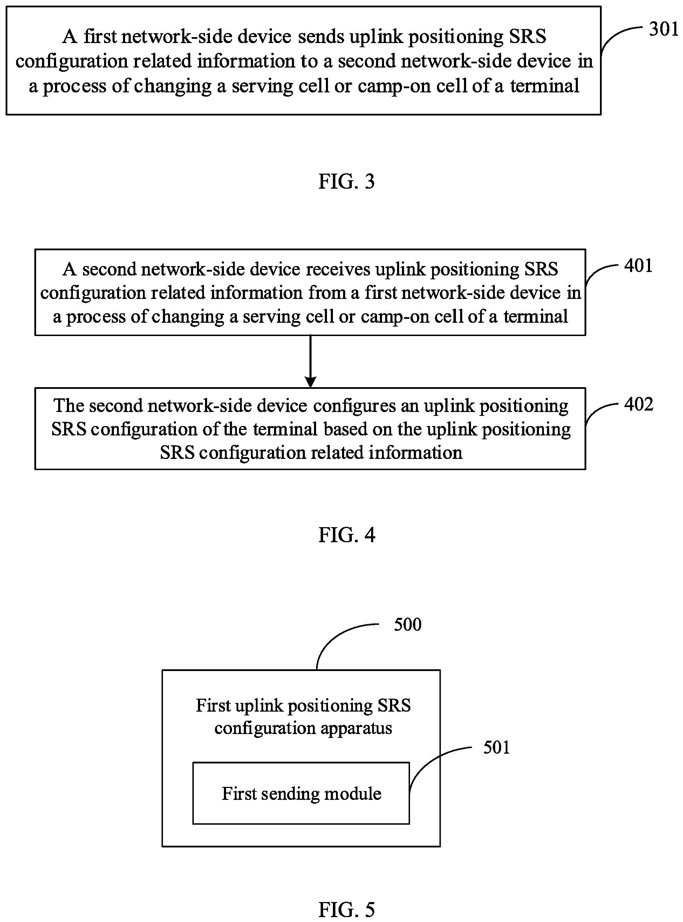

Refer to FIG. 3. An uplink positioning SRS configuration method provided in an embodiment of this application may be executed by a first network-side device. As shown in FIG. 3, the uplink positioning SRS configuration method may include the following step.

Step 301: The first network-side device sends uplink positioning SRS configuration related information to a second network-side device in a process of changing a serving cell or camp-on cell of a terminal; where the uplink positioning SRS configuration related information is used to assist the second network-side device to configure an uplink positioning SRS for the terminal.

In specific implementation, the terminal is configured with an uplink positioning SRS. For example, at a request of a third network-side device (which may be an LMF), the first network-side device configures an uplink positioning SRS for the terminal, and the terminal needs to hand over or resume to the second network-side device under influence of factors such as moving. Before that, the first network-side device sends the uplink positioning SRS configuration related information to the second network-side device, so as to assist the second network-side device to configure the uplink positioning SRS for the terminal accordingly. In this way, when the second network-side device determines that the original uplink positioning SRS configured by the first network-side device is usable and the terminal completes handover or resuming to the second network-side device, uplink positioning SRS reconfiguration does not need to be performed, thereby decreasing frequency of uplink positioning SRS reconfiguration.

The first network-side device may be a network-side device corresponding to an original serving cell or an original camp-on cell of the terminal, and the second network-side device may be a target serving cell or a target camp-on cell to which the terminal needs to hand over or resume. For example, after a first uplink positioning SRS is configured for the terminal in the original serving cell, if the terminal moves to a coverage of the target serving cell, the terminal hands over to the target serving cell. Before the handover is completed or during the handover, the original serving cell may send SRS configuration related information of the first uplink positioning SRS to the target serving cell, so that the target serving cell determines whether to continue using the first uplink positioning SRS configuration.

In some implementations, if the target serving cell determines to continue using the first uplink positioning SRS, the uplink positioning SRS is no longer reconfigured, thereby decreasing frequency of uplink positioning SRS reconfiguration and further reducing a positioning delay.

In some other implementations, if the target serving cell determines that the first uplink positioning SRS is unusable, uplink positioning SRS reconfiguration may be performed. Compared with the related art, the LMF can request the target serving cell to perform uplink positioning SRS reconfiguration again only after the related base station feeds back an uplink positioning SRS measurement failure, and the target serving cell can determine an occasion for uplink positioning SRS reconfiguration in advance, which can also reduce the positioning delay.

In an optional implementation, the first network-side device is a network-side device corresponding to the serving cell or the camp-on cell of the terminal before changing, and the second network-side device is a network-side device corresponding to the serving cell or the camp-on cell of the terminal after changing.

In specific implementation, in the process of changing the serving cell or camp-on cell, the first network-side device may actively send a handover request to the second network-side device, or when the terminal initiates a radio resource control (Radio Resource Control, RRC) resume (RRC resume) procedure on the second network-side device, after an RRC resume request (RRCResumeRequest) message sent by the terminal is received, the second network-side device sends a retrieve UE context request (RETRIEVE UE CONTEXT REQUEST) message to the first network-side device to request for a UE context (UE Context) of the terminal. In this case, the uplink positioning SRS configuration related information may be included in the handover request or UE context.

In this implementation, in the process of changing the serving cell or camp-on cell of the terminal, the serving cell or camp-on cell of the terminal before changing sends the uplink positioning SRS configuration related information to the serving cell of the terminal after changing, so that the serving cell of the terminal after changing can use the uplink positioning SRS configuration related information in advance to configure the uplink positioning SRS, or follow the uplink positioning SRS configured by the serving cell or camp-on cell of the terminal before changing, thereby decreasing frequency of uplink positioning SRS reconfiguration and reducing the positioning delay.

Certainly, in practical application, the uplink positioning SRS configuration related information can alternatively be sent via other messages, which is not specifically limited herein.

In a first optional implementation, the sending, by a first network-side device, uplink positioning SRS configuration related information to a second network-side device includes:
initiating, by the first network-side device, a handover request specific to the terminal to the second network-side device, where the handover request carries the uplink positioning SRS configuration related information.

In this implementation, a related handover request can be used for transmitting uplink positioning SRS configuration related information in the process of cell handover of the terminal, so as to avoid resource waste caused by sending the uplink positioning SRS configuration related information by the first network-side device to the second network-side device via an independent message.

In a second optional implementation, the sending, by a first network-side device, uplink positioning SRS configuration related information to a second network-side device includes:
sending, by the first network-side device, a context of the terminal to the second network-side device in a case that a retrieve UE context request message sent by the second network-side device is received, where the context of the terminal includes the uplink positioning SRS configuration related information.

In this implementation, a related retrieve UE context request message and a context of the terminal can be used for transmitting uplink positioning SRS configuration related information in the cell resuming process for the terminal, so as to avoid resource waste caused by sending uplink positioning SRS configuration related information by the first network-side device to the second network-side device via an independent message.

Optionally, the uplink positioning SRS configuration related information includes at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, where the first uplink positioning SRS configuration is a configuration generated by the first network-side device after being requested by the third network-side device;
session identification information for the first network-side device and the third network-side device; and
a third information field, used for generating an uplink positioning SRS configuration request of the third network-side device in the first information field.

Option 1: The first uplink positioning SRS configuration may be a configuration generated by the first network-side device after being requested by the third network-side device, where the third network-side device may be an LMF.

Option 2: The maintenance indication can be used to instruct the second network-side device to perform uplink positioning SRS reconfiguration or to maintain the first uplink positioning SRS configuration, where if the maintenance indication is used to instruct the second network-side device to maintain the first uplink positioning SRS configuration, the second network-side device limitedly determines whether the first uplink positioning SRS configuration is usable, and continues to use the first uplink positioning SRS configuration when determining that it is usable, and performs SRS reconfiguration for the terminal only when the first uplink positioning SRS configuration is unusable.

It should be noted that the maintenance indication may be of various types, for example, for indicating whether the second network-side device enables maintenance of the uplink positioning SRS configuration, or for indicating whether preference of the second network-side device for maintenance of the uplink positioning SRS configuration is "yes"; and so on.

In an optional implementation, in a case that the maintenance indication of the uplink positioning SRS configuration is used to enable maintenance of the uplink positioning SRS configuration:
if the second network-side device determines that the first uplink positioning SRS configuration is usable, the second network-side device sends a first update configuration to the third network-side device based on the identification information of the third network-side device, where the first update configuration is used to update the serving cell of the terminal; and
if the second network-side device determines that the first uplink positioning SRS configuration is unusable, the second network-side device sends a second update configuration to the third network-side device based on the identification information of the third network-side device, the second update configuration being used to indicate that an updated uplink positioning SRS configuration is empty, and to update the serving cell of the terminal.

In this implementation, the maintenance indication of the uplink positioning SRS configuration can be used to indicate whether the second network-side device maintains the existing uplink positioning SRS configuration of the terminal. If the second network-side device can maintain it, SRS reconfiguration is not required, and only the serving cell of the terminal is updated. Correspondingly, if the second network-side device cannot maintain the existing uplink positioning SRS configuration of the terminal, the second network-side device may inform the third network-side device through a second update configuration. In this case, the third network-side device may request the second network-side device to provide a new uplink positioning SRS configuration for the terminal based on the received second update configuration.

In another optional implementation, in a case that the maintenance indication of the uplink positioning SRS configuration is used to indicate preference for maintenance of the uplink positioning SRS configuration being yes:
if the second network-side device determines that the first uplink positioning SRS configuration is usable, the second network-side device sends a third update configuration to the third network-side device based on the identification information of the third network-side device, where the third update configuration is used to update the serving cell of the terminal; and
if the second network-side device determines that the first uplink positioning SRS configuration is unusable, the second network-side device generates a second uplink positioning SRS configuration based on the third information field; sends a fourth update configuration to the third network-side device based on the identification information of the third network-side device, the fourth update configuration includes the second uplink positioning SRS configuration; and updates the serving cell of the terminal.

In this implementation, the preference for maintenance of the uplink positioning SRS configuration can be used to indicate whether the second network-side device maintains the existing uplink positioning SRS configuration of the terminal. If the second network-side device can maintain it, it is not necessary to reconfigure an uplink positioning SRS, but only update the serving cell of the terminal. Correspondingly, if the second network-side device cannot maintain the existing uplink positioning SRS configuration of the terminal, the second network-side device can generate a new uplink positioning SRS configuration for the terminal based on other information in the uplink positioning SRS configuration related information, and inform the third network-side device of a new uplink positioning SRS configuration through a fourth update configuration. In this case, according to the received fourth update configuration, the third network-side device can request the related base stations in the terminal positioning procedure to perform uplink positioning SRS measurement based on the new uplink positioning SRS configuration.

Optionally, the first update configuration includes at least one of the following:
identification information of the terminal;
identification information of the second network-side device;
session identification information for the first network-side device and the third network-side device;
fourth information field; and an uplink positioning SRS configuration updated by the second network-side device;
   or,
the second update configuration includes at least one of the following:
   identification information of the terminal;
   identification information of the second network-side device;
   session identification information for the first network-side device and the third network-side device;
   fourth information field; and an uplink positioning SRS configuration updated by the second network-side device;
      or,
   the third update configuration includes at least one of the following:
      identification information of the terminal;
      identification information of the second network-side device;
      session identification information for the first network-side device and the third network-side device;
      fourth information field; and an uplink positioning SRS configuration updated by the second network-side device;
         or,
      the fourth update configuration includes at least one of the following:
         identification information of the terminal;
         identification information of the second network-side device;
         session identification information for the first network-side device and the third network-side device;
         fourth information field; and an uplink positioning SRS configuration updated by the second network-side device.

It should be noted that a difference between the foregoing two optional implementations lies in that: in a case that the maintenance indication of the uplink positioning SRS configuration is used to enable the maintenance of the uplink positioning SRS configuration, if the second network-side device determines that the first uplink positioning SRS configuration is unusable, it indicates that an updated uplink positioning SRS configuration is empty; and in a case that the maintenance indication of the uplink positioning SRS configuration indicates the preference for maintenance of the uplink positioning SRS configuration being yes, if the second network-side device determines that the first uplink positioning SRS configuration is unusable, a new second uplink positioning SRS configuration is generated based on the third information field and indicated to the third network-side device.

Option 3: The identification information of the third network-side device and/or the session identification information for the first network-side device and the third network-side device can be used by the second network-side device to determine a session of the third network-side device and/or a session with the third network-side device, so as to send at least one of the first update configuration, the second update configuration, the third update configuration, and the fourth update configuration to the third network-side device.

Option 4: The uplink positioning SRS configuration request of the third network-side device for generating the first information field can be used to generate a new uplink positioning SRS configuration based on an uplink positioning SRS configuration request of the third network-side device for generating the first information field when the second network-side device determines that the first uplink positioning SRS configuration in the first information field is unusable, so as to meet the requirements of the terminal and the third network-side device.

In an optional implementation, before the sending, by a first network-side device, uplink positioning SRS configuration related information to a second network-side device, the method further includes:
configuring, by the first network-side device, the first uplink positioning SRS configuration of the terminal in a case that an uplink positioning SRS configuration request of the third network-side device is received; where
the uplink positioning SRS configuration related information at least includes the first uplink positioning SRS configuration.

In this implementation, the first network-side device configures the first uplink positioning SRS configuration for the terminal in advance at the request of the third network-side device, and in the process of cell handover or resuming of the terminal, the first network-side device sends the first uplink positioning SRS configuration to the second network-side device, so that the second network-side device determines whether to continue using the first uplink positioning SRS configuration.

Optionally, the first information field includes at least one of the following:
first configuration information, used to configure resource set identification information for an uplink positioning SRS, for example, resource set ID or resource ID list;
second configuration information, used to configure resource identification information for an uplink positioning SRS, for example, resource ID;
third configuration information, used to configure a time domain resource type for the uplink positioning SRS, for example, periodic, aperiodic, or semi-static;
fourth configuration information, used to configure power control information for the uplink positioning SRS, for example, a power control reference signal or a power control reference value;
fifth configuration information, used to configure the number of ports for the uplink positioning SRS;
sixth configuration information, used to configure a time domain resource for the uplink positioning SRS, for example, period, initial symbol, symbol count, or repetition count,
seventh configuration information, used to configure a frequency domain resource for the uplink positioning SRS, for example, initial subcarrier position or frequency domain bandwidth; and
eighth configuration information, used to configure a spatial relation for the uplink positioning SRS, for example, a spatial relation with synchronization signal and PBCH block (Synchronization Signal and PBCH block, SSB).

Optionally, the second information field includes at least one of the following:
first maintenance information, used for enabling maintenance of the uplink positioning SRS configuration; and
second maintenance information, used for indicating preferred uplink positioning SRS configuration maintenance.

The first maintenance information may be an enabled (Enabled) value, and the enabled value may be true or false (true or false). In this case, if the enabled value is true, it indicates that maintenance of the uplink positioning SRS configuration is enabled; or if the enabled value is false, it indicates that maintenance of the uplink positioning SRS configuration is not enabled. If the maintenance of the uplink positioning SRS configuration is not enabled, the second network-side device can directly reconfigure the uplink positioning SRS based on information in the third information field or directly indicate to the third network-side device that the updated uplink positioning SRS configuration is empty. In this case, when receiving an uplink positioning SRS measurement failure fed back by a related base station, the third network-side device can follow a procedure in the related art to request for a new uplink positioning SRS configuration from the second network-side device.

In addition, the second maintenance information may be a preferred (Preferred) value, and the preferred value may be true or false (true or false). If the preferred value is true, it indicates that maintenance of the first uplink positioning SRS configuration is preferred; and if the preferred value is false, it indicates that maintenance of the first uplink positioning SRS configuration is not preferred. In a case that maintenance of the first uplink positioning SRS configuration is not preferred, the second network-side device can directly reconfigure the uplink positioning SRS based on the information in the third information field.

Optionally, the third information field includes at least one of the following:
first request information, used to request for resource set identification information for an uplink positioning SRS;
second request information, used to request for resource identification information for the uplink positioning SRS;
third request information, used to request for a time domain resource type for the uplink positioning SRS;
fourth request information, used to request for a time domain resource for the uplink positioning SRS;
fifth request information, used to request for a frequency domain resource for the uplink positioning SRS; and
sixth request information, used to request for a spatial relation for the uplink positioning SRS.

The first request information to the sixth request information have similar meanings and functions as the first configuration information to the third configuration information and the sixth configuration information to the eighth configuration information, respectively, which are not repeated herein.

In this embodiment of this application, the first network-side device sends the uplink positioning SRS configuration related information to the second network-side device; where the uplink positioning SRS configuration related information is used to assist the second network-side device to configure the uplink positioning SRS for the terminal. In this case, if switching or resuming (Resume) of the serving cell is performed during moving of the terminal, the original serving cell may send the uplink positioning SRS configuration related information to the switched-to or resumed target serving cell before or during switching or resuming of the serving cell, so as to assist the target serving cell to configure the uplink positioning SRS for the terminal. This can avoid a problem in the related art that after switching to the target serving cell, if the target serving cell determines to release an uplink positioning SRS configured by the original serving cell, the LMF can only request the target serving cell to reconfigure an uplink positioning SRS upon receiving a feedback measurement failure from the related base station. Therefore, the embodiments of this application can reduce a probability of uplink positioning SRS reconfiguration to reduce a positioning delay.

Referring to FIG. 4, FIG. 4 is a flowchart of another uplink positioning SRS configuration method according to an embodiment of this application. A difference between the uplink positioning SRS configuration method embodiment shown in FIG. 4 and the uplink positioning SRS configuration method embodiment shown in FIG. 3 lies in that the uplink positioning SRS configuration method embodiment shown in FIG. 4 is executed by a second network-side device, and the uplink positioning SRS configuration method embodiment shown in FIG. 3 is executed by a first network-side device.

As shown in FIG. 4, the another uplink positioning SRS configuration method may include the following steps.

Step 401: The second network-side device receives uplink positioning SRS configuration related information from the first network-side device in a process of changing a serving cell or camp-on cell of a terminal.

Step 402: The second network-side device configures an uplink positioning SRS configuration of the terminal based on the uplink positioning SRS configuration related information, where the uplink positioning SRS configuration related information is used to assist the second network-side device to configure an uplink positioning SRS for the terminal.

In specific implementation, the specific meaning of the foregoing uplink positioning SRS configuration related information is the same as that of the uplink positioning SRS configuration related information in the method embodiment shown in FIG. 3, which are not repeated herein.

In addition, that the second network-side device configures the uplink positioning SRS configuration of the terminal based on the uplink positioning SRS configuration related information may include: the second network-side device reconfigures an uplink positioning SRS for the terminal based on the uplink positioning SRS configuration related information to reduce the positioning delay; or in a case that the uplink positioning SRS configuration configured for the terminal is determined to be usable, the uplink positioning SRS configuration continues to be used, so as to reduce frequency of uplink positioning SRS reconfiguration and achieve the effect of reducing the positioning delay.

In an optional implementation, the first network-side device is a network-side device corresponding to the serving cell or the camp-on cell of the terminal before changing, and the second network-side device is a network-side device corresponding to the serving cell or the camp-on cell of the terminal after changing.

In this implementation, in the process of changing the serving cell or camp-on cell of the terminal, the second network-side device receives the uplink positioning SRS configuration related information from the first network-side device, so that the second network-side device can start the uplink positioning SRS configuration for the terminal in advance based on the obtained uplink positioning SRS configuration related information before the terminal completes the cell change, or determines in advance whether to continue using the existing uplink positioning SRS configuration of the terminal.

In an optional implementation, that the second network-side device receives uplink positioning SRS configuration related information from the first network-side device includes:
receiving, by the second network-side device, a handover request specific to the terminal from the first network-side device, where the handover request carries the uplink positioning SRS configuration related information.

In another optional implementation, that the second network-side device receives uplink positioning SRS configuration related information from the first network-side device includes:
sending, by the second network-side device, a retrieve UE context request message to the first network-side device, and receiving a context of the terminal sent by the first network-side device, where the context of the terminal includes the uplink positioning SRS configuration related information.

In this implementation, the uplink positioning SRS configuration related information may be carried in a related handover request or a response message for the retrieve UE context request message, which can reduce resources and processes for transmitting the uplink positioning SRS configuration related information.

Optionally, the uplink positioning SRS configuration related information includes at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, where the first uplink positioning SRS configuration is a configuration generated by the first network-side device after being requested by the third network-side device;
session identification information for the first network-side device and the third network-side device; and
a third information field, used for generating an uplink positioning SRS configuration request of the third network-side device in the first information field.

In an optional implementation, in a case that a maintenance indication of the uplink positioning SRS configuration is used to enable maintenance of the uplink positioning SRS configuration, the configuring, by the second network-side device, an uplink positioning SRS configuration of the terminal based on the uplink positioning SRS configuration related information includes:
if the second network-side device determines that the first uplink positioning SRS configuration is usable, sending, by the second network-side device, a first update configuration to the third network-side device based on the identification information of the third network-side device, where the first update configuration is used to update the serving cell of the terminal; and
if the second network-side device determines that the first uplink positioning SRS configuration is unusable, sending, by the second network-side device, a second update configuration to the third network-side device based on the identification information of the third network-side device, the second update configuration being used to indicate that an updated uplink positioning SRS configuration is empty, and to update the serving cell of the terminal.

In this implementation, the maintenance indication of the uplink positioning SRS configuration can be used to indicate whether the second network-side device maintains the existing uplink positioning SRS configuration of the terminal. If the second network-side device can maintain it, uplink positioning SRS reconfiguration is not required, and only the serving cell of the terminal is updated. Correspondingly, if the second network-side device cannot maintain the existing uplink positioning SRS configuration of the terminal, the second network-side device can inform the third network-side device through a second update configuration. In this case, the third network-side device may request the second network-side device to provide a new uplink positioning SRS configuration for the terminal based on the received second update configuration.

In another optional implementation, in a case that a maintenance indication of the uplink positioning SRS configuration is used to indicate that preference for maintenance of the uplink positioning SRS configuration is yes, the configuring, by the second network-side device, an uplink positioning SRS configuration of the terminal based on the uplink positioning SRS configuration related information includes:
if the second network-side device determines that the first uplink positioning SRS configuration is usable, sending, by the second network-side device, a third update configuration to the third network-side device based on the identification information of the third network-side device, where the third update configuration is used to update the serving cell of the terminal; and
if the second network-side device determines that the first uplink positioning SRS configuration is unusable, generating, by the second network-side device, a second uplink positioning SRS configuration based on the third information field; sending a fourth update configuration to the third network-side device based on the identification information of the third network-side device, the fourth update configuration includes the second uplink positioning SRS configuration; and updating the serving cell of the terminal.

In this implementation, the preference for maintenance of the uplink positioning SRS configuration can be used to indicate whether the second network-side device maintains the existing uplink positioning SRS configuration of the terminal. If the second network-side device can maintain it, it is not necessary to reconfigure an uplink positioning SRS, but only update the serving cell of the terminal. Correspondingly, if the second network-side device cannot maintain the existing uplink positioning SRS configuration of the terminal, the second network-side device can generate a new uplink positioning SRS configuration for the terminal based on other information in the uplink positioning SRS configuration related information, and inform the third network-side device of a new uplink positioning SRS configuration through a fourth update configuration. In this case, according to the received fourth update configuration, the third network-side device can request the related base stations in the terminal positioning procedure to perform uplink positioning SRS measurement based on the new uplink positioning SRS configuration.

In an optional implementation, in a case that the second network-side device generates a second uplink positioning SRS configuration based on the uplink positioning SRS configuration related information, the configuring, by the second network-side device, an uplink positioning SRS configuration of the terminal based on the uplink positioning SRS configuration related information includes:
forwarding, by the second network-side device, the second uplink positioning SRS configuration to the terminal through the first network-side device;
   or,
sending, by the second network-side device, the second uplink positioning SRS configuration to the terminal.

In a specific implementation, before the cell handover is completed, the second network-side device may forward the second uplink positioning SRS configuration to the terminal through the first network-side device, for example, a HandoverCommand message carries the second uplink positioning SRS configuration. In addition, in the process of cell handover or cell resuming, the second network-side device may alternatively directly send the second uplink positioning SRS configuration to the terminal, for example, an RRCResume message carries the second uplink positioning SRS configuration.

In this embodiment, the second network-side device may inform the terminal of the second uplink positioning SRS configuration before completion of cell handover or after completion of cell handover or cell resuming, so that the terminal can send a positioning SRS based on the second uplink positioning SRS configuration.

Optionally, the first update configuration includes at least one of the following:
identification information of the terminal;
identification information of the second network-side device;
session identification information for the first network-side device and the third network-side device;
fourth information field; and an uplink positioning SRS configuration updated by the second network-side device;
   or,
the second update configuration includes at least one of the following:
   identification information of the terminal;
   identification information of the second network-side device;
   session identification information for the first network-side device and the third network-side device;
   fourth information field; and an uplink positioning SRS configuration updated by the second network-side device;
      or,
   the third update configuration includes at least one of the following:
      identification information of the terminal;
      identification information of the second network-side device;
      session identification information for the first network-side device and the third network-side device;
      fourth information field; and an uplink positioning SRS configuration updated by the second network-side device;
         or,
      the fourth update configuration includes at least one of the following:
         identification information of the terminal;
         identification information of the second network-side device;
         session identification information for the first network-side device and the third network-side device;
         fourth information field; and an uplink positioning SRS configuration updated by the second network-side device.

Optionally, the fourth information field includes at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

The uplink positioning SRS configuration method executed by the second network-side device provided in this embodiment of this application is used in combination with the uplink positioning SRS configuration method executed by the first network-side device as shown in FIG. 3, so as to jointly achieve the effects of reducing a probability of uplink positioning SRS reconfiguration and reducing a positioning delay.

For ease of understanding, the uplink positioning SRS configuration method provided in this embodiment of this application is described by using the following two specific embodiments as examples:

### Specific embodiment 1

Step 1a: An LMF requests, from a first network-side device, an uplink positioning SRS configuration, carrying a requested SRS configuration request.

Step 2a: The first network-side device determines a first uplink positioning SRS configuration based on the requested SRS and sends a first uplink positioning SRS configuration to a target UE and the LMF.

Step 3a: The UE enters an RRC inactive (INACTIVE) state due to no service for a period of time, and stores the first uplink positioning SRS configuration. The UE performs selection due to moving to camp on the second network-side device, and when a positioning requirement is triggered (for example event trigger (event trigger)), the UE initiates an RRC resume procedure on the second network-side device. After receiving an RRCResumeRequest message from the UE, the second network-side device sends a RETRIEVE UE CONTEXT REQUEST message to the first network-side device to request for a UE context.

Step 4a: The first network-side device sends a RETRIEVE UE CONTEXT RESPONSE to the second network-side device, where the RETRIEVE UE CONTEXT RESPONSE includes a first uplink positioning SRS configuration, an uplink positioning SRS configuration maintenance request indication, a requested SRS configuration request sent by the LMF and used for configuring the first uplink positioning SRS configuration, an LMF routing (Routing) ID, an NRPPa Transaction ID, and the like.

Step 5a: If the maintenance request indicates that the uplink positioning SRS needs to be maintained, the second network-side device determines whether to continue using the first uplink positioning SRS configuration (for example, based on a configured uplink resource). If it can be still used, the configuration in RRCResume includes the first uplink positioning SRS configuration; or if it cannot be used any longer, a new second uplink positioning SRS configuration is generated based on the requested SRS configuration, with the second uplink positioning SRS configuration being included in the configuration of RRCResume.

Step 6a: If the second network-side device generates the second uplink positioning SRS configuration, the second network-side device sends an uplink positioning SRS configuration update to the LMF based on the LMF Routing ID and the NRPPa Transaction ID in step 4a.

Step 7a: The LMF sends an SRS measurement request to the related base station based on the second uplink positioning SRS configuration.

### Specific embodiment 2

Step 1b: An LMF requests, from a first network-side device, an uplink positioning SRS configuration, carrying a requested SRS configuration request.

Step 2b: The first network-side device determines a first uplink positioning SRS configuration based on the requested SRS and sends the first uplink positioning SRS configuration to a target UE and the LMF.

Step 3b: The UE triggers a measurement report for handover to the second network-side device (the network-side device corresponding to the target serving cell) due to moving, and sends the measurement report to the first network-side device.

Step 4b: The first network-side device sends a handover request (HANDOVER REQUEST) to the second network-side device, where the handover request includes a first uplink positioning SRS configuration, an uplink positioning SRS configuration maintenance request indication, a requested SRS configuration request sent by the LMF and used for configuring the first uplink positioning SRS configuration, an LMF routing (Routing) ID, an NRPPa transaction ID, and the like.

Step 5b: If the maintenance request indicates that the uplink positioning SRS needs to be maintained, the second network-side device determines whether the first uplink positioning SRS configuration can be continuously used (for example, based on a configured uplink resource). If it can be still used, a reconfiguration in HandoverCommand includes the first uplink positioning SRS configuration; or if it cannot be used any longer, a new second uplink positioning SRS configuration is generated based on the requested SRS configuration, and the configuration in HandoverCommand includes the second uplink positioning SRS configuration.

Step 6b: The first network-side device sends RRC reconfiguration (RRC Reconfiguration) information to the UE, including the second uplink positioning SRS configuration determined by the second network-side device. The UE hands over to the second network-side device through a physical random access channel (Physical Random Access Channel, PRACH) based on RRC reconfiguration information.

Step 7b: The LMF sends an SRS measurement request to the related base station based on the second uplink positioning SRS configuration.

It should be noted that, in the uplink positioning SRS configuration method provided by the embodiments of this application may be executed by an uplink positioning SRS configuration apparatus, or a control module for executing the uplink positioning SRS configuration method in the uplink positioning SRS configuration apparatus. In the embodiments of this application, the uplink positioning SRS configuration method being performed by the uplink positioning SRS configuration apparatus is used as an example to describe the uplink positioning SRS configuration apparatus provided in the embodiments of this application.

Refer to FIG. 5. A first uplink positioning SRS configuration apparatus 500 provided in an embodiment of this application can be applied to a first network-side device. The first uplink positioning SRS configuration apparatus 500 includes:
a first sending module 501, configured to send uplink positioning SRS configuration related information to a second network-side device in a process of changing a serving cell or camp-on cell of a terminal; where
the uplink positioning SRS configuration related information is used to assist the second network-side device to configure an uplink positioning SRS for the terminal.

Optionally, the first network-side device is a network-side device corresponding to the serving cell or the camp-on cell of the terminal before changing, and the second network-side device is a network-side device corresponding to the serving cell or the camp-on cell of the terminal after changing.

Optionally, the first sending module 501 is specifically configured to:
initiate a handover request specific to the terminal to the second network-side device, where the handover request carries the uplink positioning SRS configuration related information.

Optionally, the first sending module 501 is specifically configured to:
send a context of the terminal to the second network-side device in a case that a retrieve UE context request message sent by the second network-side device is received, where the context of the terminal includes the uplink positioning SRS configuration related information.

Optionally, the uplink positioning SRS configuration related information includes at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, where the first uplink positioning SRS configuration is a configuration generated by the first network-side device after being requested by the third network-side device;
session identification information for the first network-side device and the third network-side device; and
a third information field, used for generating an uplink positioning SRS configuration request of the third network-side device in the first information field.

Optionally, the uplink positioning SRS configuration apparatus 500 further includes:
a second configuration module, configured to configure the first uplink positioning SRS configuration of the terminal in a case that an uplink positioning SRS configuration request of the third network-side device is received; where
the uplink positioning SRS configuration related information at least includes the first uplink positioning SRS configuration.

Optionally, the first information field includes at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

Optionally, the second information field includes at least one of the following:
first maintenance information, used for enabling maintenance of the uplink positioning SRS configuration; and
second maintenance information, used for indicating preferred uplink positioning SRS configuration maintenance.

Optionally, the third information field includes at least one of the following:
first request information, used to request for resource set identification information for an uplink positioning SRS;
second request information, used to request for resource identification information for the uplink positioning SRS;
third request information, used to request for a time domain resource type for the uplink positioning SRS;
fourth request information, used to request for a time domain resource for the uplink positioning SRS;
fifth request information, used to request for a frequency domain resource for the uplink positioning SRS; and
sixth request information, used to request for a spatial relation for the uplink positioning SRS.

The first uplink positioning SRS configuration apparatus 500 provided in this embodiment of this application is capable of implementing the processes implemented in the method embodiments in FIG. 3, with the same technical effects achieved. To avoid repetition, details are not described herein again.

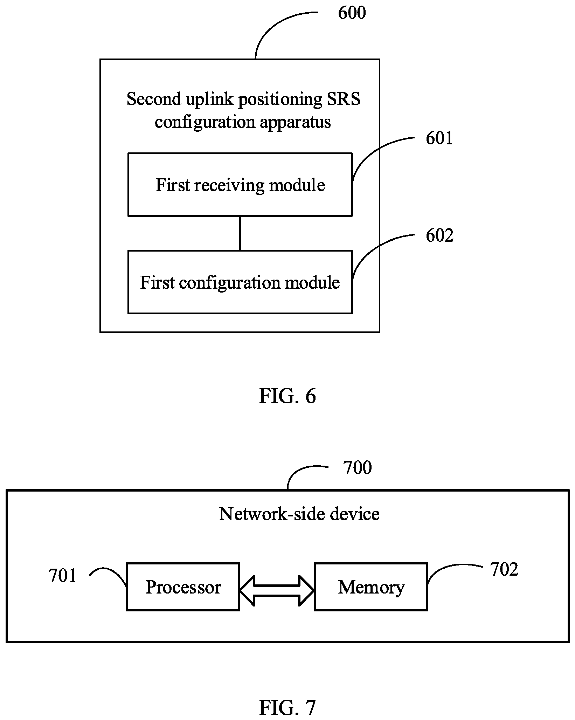

Refer to FIG. 6. A second uplink positioning SRS configuration apparatus 600 provided in an embodiment of this application can be applied to a second network-side device. The second uplink positioning SRS configuration apparatus 600 includes:
a first receiving module 601, configured to receive uplink positioning SRS configuration related information from a first network-side device in a process of changing a serving cell or camp-on cell of a terminal; and
a first configuration module 602, configured to configure an uplink positioning SRS configuration of the terminal based on the uplink positioning SRS configuration related information; where
the uplink positioning SRS configuration related information is used to assist the second network-side device to configure an uplink positioning SRS for the terminal.

Optionally, the first network-side device is a network-side device corresponding to the serving cell or the camp-on cell of the terminal before changing, and the second network-side device is a network-side device corresponding to the serving cell or the camp-on cell of the terminal after changing.

Optionally, the first receiving module 601 is specifically configured to:
receive a handover request specific to the terminal from the first network-side device, where the handover request carries the uplink positioning SRS configuration related information.

Optionally, the first receiving module 601 is specifically configured to:
send a retrieve UE context request message to the first network-side device, and receive a context of the terminal sent by the first network-side device, where the context of the terminal includes the uplink positioning SRS configuration related information.

Optionally, the uplink positioning SRS configuration related information includes at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, where the first uplink positioning SRS configuration is a configuration generated by the first network-side device after being requested by the third network-side device;
session identification information for the first network-side device and the third network-side device; and
a third information field, used for generating an uplink positioning SRS configuration request of the third network-side device in the first information field.

Optionally, in a case that a maintenance indication of the uplink positioning SRS configuration is used to enable maintenance of the uplink positioning SRS configuration, the first configuration module 602 includes:
a first sending unit, configured to: if the second network-side device determines that the first uplink positioning SRS configuration is usable, send a first update configuration to the third network-side device based on the identification information of the third network-side device, where the first update configuration is used to update the serving cell of the terminal; and
a second sending unit, configured to: if the second network-side device determines that the first uplink positioning SRS configuration is unusable, send a second update configuration to the third network-side device based on the identification information of the third network-side device, the second update configuration being used to indicate that an updated uplink positioning SRS configuration is empty, and to update the serving cell of the terminal.

Optionally, in a case that a maintenance indication of the uplink positioning SRS configuration is used to indicate preference for maintenance of the uplink positioning SRS configuration being yes, the first configuration module 602 includes:
a third sending unit, configured to: if the second network-side device determines that the first uplink positioning SRS configuration is usable, send a third update configuration to the third network-side device based on the identification information of the third network-side device, where the third update configuration is used to update the serving cell of the terminal; and
a fourth sending unit, configured to: if the second network-side device determines that the first uplink positioning SRS configuration is unusable, generate a second uplink positioning SRS configuration based on the third information field; send a fourth update configuration to the third network-side device based on the identification information of the third network-side device, the fourth update configuration includes the second uplink positioning SRS configuration; and update the serving cell of the terminal.

Optionally, the first update configuration includes at least one of the following:
identification information of the terminal;
identification information of the second network-side device;
session identification information for the first network-side device and the third network-side device;
fourth information field; and an uplink positioning SRS configuration updated by the second network-side device;
   or,
the second update configuration includes at least one of the following:
   identification information of the terminal;
   identification information of the second network-side device;
   session identification information for the first network-side device and the third network-side device;
   fourth information field; and an uplink positioning SRS configuration updated by the second network-side device;
      or,
   the third update configuration includes at least one of the following:
      identification information of the terminal;
      identification information of the second network-side device;
      session identification information for the first network-side device and the third network-side device;
      fourth information field; and an uplink positioning SRS configuration updated by the second network-side device;
         or,
      the fourth update configuration includes at least one of the following:
         identification information of the terminal;
         identification information of the second network-side device;
         session identification information for the first network-side device and the third network-side device;
         fourth information field; and an uplink positioning SRS configuration updated by the second network-side device.

Optionally, the fourth information field includes at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

Optionally, in a case that the second network-side device generates a second uplink positioning SRS configuration based on the uplink positioning SRS configuration related information, the first configuration module 602 is specifically configured to:
forward the second uplink positioning SRS configuration to the terminal through the first network-side device;
   or,
send the second uplink positioning SRS configuration to the terminal.

The second uplink positioning SRS configuration apparatus 600 provided in this embodiment of this application is capable of implementing the processes implemented in the method embodiments in FIG. 4, with the same technical effects achieved. To avoid repetition, details are not described herein again.

Optionally, as shown in FIG. 7, an embodiment of this application further provides a network-side device 700, including a processor 701, a memory 702, and a program or instructions stored in the memory 702 and capable of running on the processor 701. For example, if the network-side device 700 is a first network-side device and when the program or instructions are executed by the processor 701, the processes of the foregoing method embodiment shown in FIG. 3 are implemented, with the same technical effects achieved; or if the network-side device 700 is a second network-side device and when the program or instructions are executed by the processor 701, the processes of the foregoing method embodiment shown in FIG. 4 are implemented, with the same technical effects achieved. To avoid repetition, details are not described herein again.

An embodiment of this application further provides a network-side device, including a processor and a communication interface. The communication interface is configured to send uplink positioning SRS configuration related information to a second network-side device; where the uplink positioning SRS configuration related information is used to assist the second network-side device to configure an uplink positioning SRS for the terminal;
or,
the communication interface is configured to receive uplink positioning SRS configuration related information from a first network-side device; and the processor is configured to configure an uplink positioning SRS configuration of the terminal based on the uplink positioning SRS configuration related information, where the uplink positioning SRS configuration related information is used to assist the second network-side device to configure an uplink positioning SRS for the terminal.

The network-side device embodiments correspond to the foregoing first network-side device or second network-side device method embodiments, and the implementation processes and implementations of the foregoing method embodiments can be applied to the network-side device embodiments, with the same technical effects achieved.

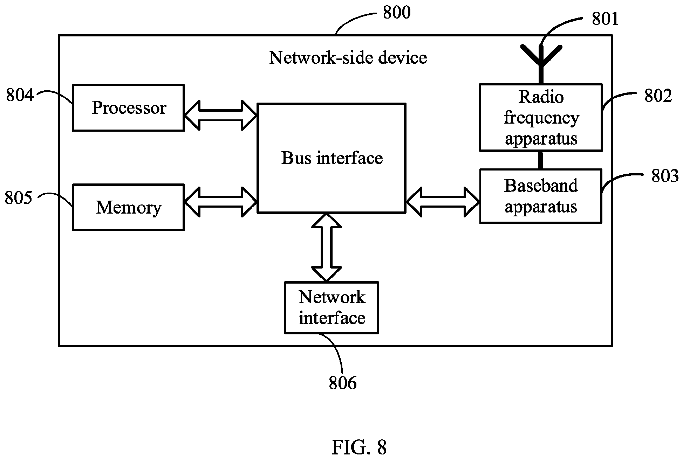

Specifically, an embodiment of this application further provides a network-side device. As shown in FIG. 8, the network-side device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The frequency band processing apparatus may be located in the baseband apparatus 803. The method performed by the network-side device in the foregoing embodiments may be implemented in the baseband apparatus 803, and the baseband apparatus 803 includes a processor 804 and a memory 805.

The baseband apparatus 803 may include, for example, at least one baseband board, where a plurality of chips are disposed on the baseband board. As shown in FIG. 8, one of the chips is, for example, the processor 804, connected to the memory 805, to invoke a program in the memory 805 to perform the operation of the network-side device shown in the foregoing method embodiment.

The baseband apparatus 803 may further include a network interface 806, configured to exchange information with the radio frequency apparatus 802, where the interface is, for example, a common public radio interface (Common Public Radio Interface, CPRI).

Specifically, the network-side device in this embodiment of this application further includes: instructions or a program stored in the memory 805 and capable of running on the processor 804. The processor 804 invokes the instructions or program in the memory 805 to execute the method executed by the modules shown in FIG. 5 or FIG. 6, with the same technical effects achieved. To avoid repetition, details are not repeated herein.

An embodiment of this application further provides a readable storage medium, where a program or instructions are stored in the readable storage medium. When the program or instructions are executed by a processor, the processes of the foregoing method embodiments shown in FIG. 3 or FIG. 4 are implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing method embodiments shown in FIG. 3 or FIG. 4, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory storage medium, and when being executed by at least one processor, the computer program product is configured to implement the processes of the foregoing embodiments of the method shown in FIG. 3 or FIG. 4, with the same technical effects achieved. To avoid repetition, details are not repeated herein.

An embodiment of this application further provides a communication device, configured to perform the processes of the foregoing method embodiments shown in FIG. 3 or FIG. 4, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the related art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An uplink positioning reference signal SRS configuration method, comprising:
sending, by a first network-side device, uplink positioning SRS configuration related information to a second network-side device in a process of changing a serving cell or camp-on cell of a terminal; wherein
the uplink positioning SRS configuration related information is used to assist the second network-side device to configure an uplink positioning SRS for the terminal.

2. The method according to claim 1, wherein the first network-side device is a network-side device corresponding to the serving cell or the camp-on cell of the terminal before changing, and the second network-side device is a network-side device corresponding to the serving cell or the camp-on cell of the terminal after changing.

3. The method according to claim 1 or 2, wherein the sending, by a first network-side device, uplink positioning SRS configuration related information to a second network-side device in a process of changing a serving cell of a terminal comprises:
initiating, by the first network-side device, a handover request specific to the terminal to the second network-side device, wherein the handover request carries the uplink positioning SRS configuration related information.

4. The method according to claim 1 or 2, wherein the sending, by a first network-side device, uplink positioning SRS configuration related information to a second network-side device in a process of changing a camp-on cell of a terminal comprises:
sending, by the first network-side device, a context of the terminal to the second network-side device in a case that a retrieve UE context request message sent by the second network-side device is received, wherein the context of the terminal comprises the uplink positioning SRS configuration related information.

5. The method according to any one of claims 1 to 4, wherein the uplink positioning SRS configuration related information comprises at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, wherein the first uplink positioning SRS configuration is a configuration generated by the first network-side device after being requested by the third network-side device;
session identification information for the first network-side device and the third network-side device;
a routing identifier (Routing ID) of the third network-side device;
a new radio positioning protocol A transaction ID NRPPa transaction ID between the first network-side device and the third network-side device; and
a third information field, used for reconfiguring an uplink positioning SRS.

6. The method according to claim 5, wherein before the first network-side device sends the uplink positioning SRS configuration related information to the second network-side device, the method further comprises:
configuring, by the first network-side device, the first uplink positioning SRS configuration of the terminal in a case that an uplink positioning SRS configuration request of the third network-side device is received; wherein
the uplink positioning SRS configuration related information at least comprises the first uplink positioning SRS configuration.

7. The method according to claim 5, wherein the first information field comprises at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

8. The method according to claim 5, wherein the second information field comprises at least one of the following:
first maintenance information, used for enabling maintenance of the uplink positioning SRS configuration; and
second maintenance information, used for indicating preferred uplink positioning SRS configuration maintenance.

9. The method according to claim 5, wherein the third information field comprises at least one of the following:
first request information, used to request for resource set identification information for an uplink positioning SRS;
second request information, used to request for resource identification information for the uplink positioning SRS;
third request information, used to request for a time domain resource type for the uplink positioning SRS;
fourth request information, used to request for a time domain resource for the uplink positioning SRS;
fifth request information, used to request for a frequency domain resource for the uplink positioning SRS; and
sixth request information, used to request for a spatial relation for the uplink positioning SRS.

10. An uplink positioning reference signal SRS configuration apparatus, applied to a first network-side device, wherein the uplink positioning SRS configuration apparatus comprises:
a first sending module, configured to send uplink positioning SRS configuration related information to a second network-side device in a process of changing a serving cell or camp-on cell of a terminal; wherein
the uplink positioning SRS configuration related information is used to assist the second network-side device to configure an uplink positioning SRS for the terminal.

11. The apparatus according to claim 10, wherein the first network-side device is a network-side device corresponding to the serving cell or the camp-on cell of the terminal before changing, and the second network-side device is a network-side device corresponding to the serving cell or the camp-on cell of the terminal after changing.

12. The apparatus according to claim 10 or 11, wherein the first sending module is specifically configured to:
initiate a handover request specific to the terminal to the second network-side device, wherein the handover request carries the uplink positioning SRS configuration related information.

13. The apparatus according to claim 10 or 11, wherein the first sending module is specifically configured to:
send a context of the terminal to the second network-side device in a case that a retrieve UE context request message sent by the second network-side device is received, wherein the context of the terminal comprises the uplink positioning SRS configuration related information.

14. The apparatus according to any one of claims 10 to 13, wherein the uplink positioning SRS configuration related information comprises at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, wherein the first uplink positioning SRS configuration is a configuration generated by the first network-side device after being requested by the third network-side device;
session identification information for the first network-side device and the third network-side device;
a routing identifier (Routing ID) of the third network-side device;
a new radio positioning protocol A transaction ID NRPPa transaction ID between the first network-side device and the third network-side device; and
a third information field, used for reconfiguring an uplink positioning SRS.

15. The apparatus according to claim 14, wherein the first information field comprises at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

16. The apparatus according to claim 14, wherein the second information field comprises at least one of the following:
first maintenance information, used for enabling maintenance of the uplink positioning SRS configuration; and
second maintenance information, used for indicating preferred uplink positioning SRS configuration maintenance.

17. The apparatus according to claim 14, wherein the third information field comprises at least one of the following:
first request information, used to request for resource set identification information for an uplink positioning SRS;
second request information, used to request for resource identification information for the uplink positioning SRS;
third request information, used to request for a time domain resource type for the uplink positioning SRS;
fourth request information, used to request for a time domain resource for the uplink positioning SRS;
fifth request information, used to request for a frequency domain resource for the uplink positioning SRS; and
sixth request information, used to request for a spatial relation for the uplink positioning SRS.

18. An uplink positioning reference signal SRS configuration method, comprising:
receiving, by a second network-side device, uplink positioning SRS configuration related information from a first network-side device in a process of changing a serving cell or camp-on cell of a terminal; and
configuring, by the second network-side device, an uplink positioning SRS configuration of the terminal based on the uplink positioning SRS configuration related information; wherein
the uplink positioning SRS configuration related information is used to assist the second network-side device to configure an uplink positioning SRS for the terminal.

19. The method according to claim 18, wherein the first network-side device is a network-side device corresponding to the serving cell or the camp-on cell of the terminal before changing, and the second network-side device is a network-side device corresponding to the serving cell or the camp-on cell of the terminal after changing.

20. The method according to claim 18 or 19, wherein the receiving, by a second network-side device, uplink positioning SRS configuration related information from a first network-side device in a process of changing a serving cell of a terminal comprises:
receiving, by the second network-side device, a handover request specific to the terminal from the first network-side device, wherein the handover request carries the uplink positioning SRS configuration related information.

21. The method according to claim 18 or 19, wherein the receiving, by a second network-side device, uplink positioning SRS configuration related information from a first network-side device in a process of changing a camp-on cell of a terminal comprises:
sending, by the second network-side device, a retrieve UE context request message to the first network-side device, and receiving a context of the terminal sent by the first network-side device, wherein the context of the terminal comprises the uplink positioning SRS configuration related information.

22. The method according to any one of claims 18 to 21, wherein the uplink positioning SRS configuration related information comprises at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, wherein the first uplink positioning SRS configuration is a configuration generated by the first network-side device after being requested by the third network-side device;
session identification information for the first network-side device and the third network-side device;
a routing identifier (Routing ID) of the third network-side device;
a new radio positioning protocol A transaction ID NRPPa transaction ID between the first network-side device and the third network-side device; and
a third information field, used for reconfiguring an uplink positioning SRS.

23. The method according to claim 22, wherein in a case that a maintenance indication of the uplink positioning SRS configuration is used to enable maintenance of the uplink positioning SRS configuration, the configuring, by the second network-side device, an uplink positioning SRS configuration of the terminal based on the uplink positioning SRS configuration related information comprises:
if the second network-side device determines that the first uplink positioning SRS configuration is usable, sending, by the second network-side device, a first update configuration to the third network-side device based on the identification information of the third network-side device, wherein the first update configuration is used to update the serving cell of the terminal; and
if the second network-side device determines that the first uplink positioning SRS configuration is unusable, sending, by the second network-side device, a second update configuration to the third network-side device based on the identification information of the third network-side device, the second update configuration being used to indicate that an updated uplink positioning SRS configuration is empty, and to update the serving cell of the terminal.

24. The method according to claim 22, wherein in a case that a maintenance indication of the uplink positioning SRS configuration is used to indicate preference for maintenance of the uplink positioning SRS configuration being yes, the configuring, by the second network-side device, an uplink positioning SRS configuration of the terminal based on the uplink positioning SRS configuration related information comprises:
if the second network-side device determines that the first uplink positioning SRS configuration is usable, sending, by the second network-side device, a third update configuration to the third network-side device based on the identification information of the third network-side device, wherein the third update configuration is used to update the serving cell of the terminal; and
if the second network-side device determines that the first uplink positioning SRS configuration is unusable, generating, by the second network-side device, a second uplink positioning SRS configuration based on the third information field; sending a fourth update configuration to the third network-side device based on the identification information of the third network-side device, the fourth update configuration comprises the second uplink positioning SRS configuration; and updating the serving cell of the terminal.

25. The method according to claim 23 or 24, wherein the first update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the second update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the third update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the fourth update configuration comprises at least one of the following:
identification information of the terminal;
identification information of the second network-side device;
session identification information for the first network-side device and the third network-side device;
fourth information field; and an uplink positioning SRS configuration updated by the second network-side device.

26. The method according to claim 25, wherein the fourth information field comprises at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

27. The method according to claim 23, wherein in a case that the second network-side device generates a second uplink positioning SRS configuration based on the uplink positioning SRS configuration related information, the configuring, by the second network-side device, an uplink positioning SRS configuration of the terminal based on the uplink positioning SRS configuration related information comprises:
forwarding, by the second network-side device, the second uplink positioning SRS configuration to the terminal through the first network-side device;
or,
sending, by the second network-side device, the second uplink positioning SRS configuration to the terminal.

28. An uplink positioning reference signal SRS configuration apparatus, applied to a second network-side device, wherein the uplink positioning SRS configuration apparatus comprises:
a first receiving module, configured to receive uplink positioning SRS configuration related information from a first network-side device in a process of changing a serving cell or camp-on cell of a terminal; and
a first configuration module, configured to configure an uplink positioning SRS configuration of the terminal based on the uplink positioning SRS configuration related information; wherein
the uplink positioning SRS configuration related information is used to assist the second network-side device to configure an uplink positioning SRS for the terminal.

29. The apparatus according to claim 28, wherein the first network-side device is a network-side device corresponding to the serving cell or the camp-on cell of the terminal before changing, and the second network-side device is a network-side device corresponding to the serving cell or the camp-on cell of the terminal after changing.

30. The apparatus according to claim 28 or 29, wherein the first receiving module is specifically configured to:
receive a handover request specific to the terminal from the first network-side device, wherein the handover request carries the uplink positioning SRS configuration related information.

31. The apparatus according to claim 28 or 29, wherein the first receiving module is specifically configured to:
send a retrieve UE context request message to the first network-side device, and receive a context of the terminal sent by the first network-side device, wherein the context of the terminal comprises the uplink positioning SRS configuration related information.

32. The apparatus according to any one of claims 28 to 31, wherein the uplink positioning SRS configuration related information comprises at least one of the following:
identification information of the terminal;
first information field, used for a current first uplink positioning SRS configuration of the terminal;
second information field, which is a maintenance indication used for the current first uplink positioning SRS configuration of the terminal;
identification information of a third network-side device, wherein the first uplink positioning SRS configuration is a configuration generated by the first network-side device after being requested by the third network-side device;
session identification information for the first network-side device and the third network-side device;
a routing identifier (Routing ID) of the third network-side device;
a new radio positioning protocol A transaction ID NRPPa transaction ID between the first network-side device and the third network-side device; and
a third information field, used for reconfiguring an uplink positioning SRS.

33. The apparatus according to claim 32, wherein in a case that a maintenance indication of the uplink positioning SRS configuration is used to enable maintenance of the uplink positioning SRS configuration, the first configuration module comprises:
a first sending unit, configured to: if the second network-side device determines that the first uplink positioning SRS configuration is usable, send a first update configuration to the third network-side device based on the identification information of the third network-side device, wherein the first update configuration is used to update the serving cell of the terminal; and
a second sending unit, configured to: if the second network-side device determines that the first uplink positioning SRS configuration is unusable, send a second update configuration to the third network-side device based on the identification information of the third network-side device, the second update configuration being used to indicate that an updated uplink positioning SRS configuration is empty, and to update the serving cell of the terminal.

34. The apparatus according to claim 32, wherein in a case that a maintenance indication of the uplink positioning SRS configuration is used to indicate preference for maintenance of the uplink positioning SRS configuration being yes, the first configuration module comprises:
a third sending unit, configured to: if the second network-side device determines that the first uplink positioning SRS configuration is usable, send a third update configuration to the third network-side device based on the identification information of the third network-side device, wherein the third update configuration is used to update the serving cell of the terminal; and
a fourth sending unit, configured to: if the second network-side device determines that the first uplink positioning SRS configuration is unusable, generate a second uplink positioning SRS configuration based on the third information field; send a fourth update configuration to the third network-side device based on the identification information of the third network-side device, the fourth update configuration comprises the second uplink positioning SRS configuration; and update the serving cell of the terminal.

35. The apparatus according to claim 33 or 34, wherein the first update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the second update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the third update configuration comprises at least one of the following:
identification information of the terminal;
identification information of the second network-side device;
session identification information for the first network-side device and the third network-side device;
fourth information field; and an uplink positioning SRS configuration updated by the second network-side device;
or,
the fourth update configuration comprises at least one of the following:
identification information of the terminal;
identification information of the second network-side device;
session identification information for the first network-side device and the third network-side device;
fourth information field; and an uplink positioning SRS configuration updated by the second network-side device.

36. The apparatus according to claim 35, wherein the fourth information field comprises at least one of the following:
first configuration information, used to configure resource set identification information for an uplink positioning SRS;
second configuration information, used to configure resource identification information for an uplink positioning SRS;
third configuration information, used to configure a time domain resource type for the uplink positioning SRS;
fourth configuration information, used to configure power control information for the uplink positioning SRS;
fifth configuration information, used to configure the number of ports for the uplink positioning SRS;
sixth configuration information, used to configure a time domain resource for the uplink positioning SRS;
seventh configuration information, used to configure a frequency domain resource for the uplink positioning SRS; and
eighth configuration information, used to configure a spatial relation for the uplink positioning SRS.

37. The apparatus according to claim 33, wherein in a case that the second network-side device generates a second uplink positioning SRS configuration based on the uplink positioning SRS configuration related information, the first configuration module is specifically configured to:
forward the second uplink positioning SRS configuration to the terminal through the first network-side device;
or,
send the second uplink positioning SRS configuration to the terminal.

38. A network-side device, comprising a processor, a memory, and a program or instructions stored in the memory and capable of running on the processor, wherein when the program or instructions are executed by the processor, the steps of the uplink positioning reference signal SRS configuration method according to any one of claims 1 to 9 are implemented, or the steps of the uplink positioning SRS configuration method according to any one of claims 18 to 27 are implemented.

39. A readable storage medium, wherein the readable storage medium stores a program or instructions, and when the program or instructions are executed by a processor, the steps of the uplink positioning reference signal SRS configuration method according to any one of claims 1 to 9 are implemented, or the steps of the uplink positioning SRS configuration method according to any one of claims 18 to 27 are implemented.

40. A chip, comprising a processor and a communication interface, wherein the communication interface is coupled to the processor, and the processor is configured to execute a program or instructions to implement the steps of the uplink positioning reference signal SRS configuration method according to any one of claims 1 to 9, or the steps of the uplink positioning SRS configuration method according to any one of claims 18 to 27.

41. A computer program product, wherein the computer program product is stored in a non-volatile storage medium, and the computer program product is executed by at least one processor to implement the steps of the uplink positioning reference signal SRS configuration method according to any one of claims 1 to 9, or the steps of the uplink positioning SRS configuration method according to any one of claims 18 to 27.

42. A communication device, configured to perform the steps of the uplink positioning reference signal SRS configuration method according to any one of claims 1 to 9, or the steps of the uplink positioning SRS configuration method according to any one of claims 18 to 27.
